(19)

Europäisches
Patentamt
European
Patent Office
Office européen
des brevets

(11) **EP 4 752 957 A1**

(12) **EUROPEAN PATENT APPLICATION**

(43) Date of publication:
**03.06.2026 Bulletin 2026/23**

(21) Application number: **25219302.4**

(22) Date of filing: **28.11.2025**

(51) International Patent Classification (IPC):
**H01M 4/133** (2010.01)   **H01M 4/1393** (2010.01)
**H01M 4/36** (2006.01)

(52) Cooperative Patent Classification (CPC):
**H01M 4/133; H01M 4/1393; H01M 4/366;**
H01M 2004/021; H01M 2004/027

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH LA MA MD TN**

(30) Priority: **29.11.2024 KR 20240175698**

(71) Applicant: **SAMSUNG SDI CO., LTD.
Yongin-si, Gyeonggi-do 17084 (KR)**

(72) Inventors:
• **Cha, Yu Rim
16678 Gyeonggi-do, Suwon-si (KR)**

• **Oh, Se Young
16678 Gyeonggi-do, Suwon-si (KR)**
• **Cho, Hang In
16678 Gyeonggi-do, Suwon-si (KR)**
• **Yu, So Jeong
16678 Gyeonggi-do, Suwon-si (KR)**
• **Kim, Deok Hyun
16678 Gyeonggi-do, Suwon-si (KR)**

(74) Representative: **Meissner Bolte Partnerschaft
mbB
Patentanwälte Rechtsanwälte
Postfach 86 06 24
81633 München (DE)**

(54) **NEGATIVE ELECTRODE ACTIVE MATERIAL FOR RECHARGEABLE LITHIUM BATTERY AND RECHARGEABLE LITHIUM BATTERY INCLUDING THE SAME**

(57)   A negative electrode active material for a rechargeable lithium battery and a rechargeable lithium battery including the negative electrode active material are provided. The negative electrode active material includes natural graphite containing secondary particles in which primary particles are assembled, and a coating layer that surrounds the secondary particles and includes amorphous carbon. The negative electrode active material has a d002 value of 3.356 Å to 3.360 Å and an orientation degree of 90 or less.

**FIG. 1.**

EP 4 752 957 A1

**Description**

**CROSS-REFERENCE TO RELATED APPLICATION**

The present application claims priority to and the benefit of Korean Patent Application No.10-2024-0175698, filed on November 29, 2024, in the Korean Intellectual Property Office, the entire disclosure of which is incorporated herein by reference.

**BACKGROUND**

**1. Field**

The present disclosure relates to a negative electrode active material for a rechargeable lithium battery and a rechargeable lithium battery including the same.

**2. Background**

Recently, with the rapid spread of electronic devices, such as mobile phones, notebook computers, and electric vehicles, using batteries, the demand for secondary batteries having high energy density and high capacity is rapidly increasing. Therefore, research and development for improving the performance of rechargeable lithium batteries is actively being conducted.

A rechargeable lithium battery is a battery including a positive electrode and a negative electrode that contains an active material capable of the intercalation and deintercalation of lithium ions and produces electric energy by oxidation and reduction reactions when the lithium ions are intercalated into and deintercalated from the positive electrode and the negative electrode.

**SUMMARY**

The present disclosure is directed to providing a negative electrode active material for a rechargeable lithium battery, which exhibits low resistance, high energy density, and boost charging performance.

The present disclosure is also directed to providing a rechargeable lithium battery including the negative electrode active material.

The negative electrode active material for a rechargeable lithium battery includes natural graphite containing secondary particles in which primary particles are assembled, and a coating layer that surrounds the secondary particle and includes amorphous carbon, wherein the negative electrode active material has an orientation degree of 90 or less and a d002 of 3.356 angstrom (Å) to 3.360 Å.

A further aspect of the present disclosure provides a rechargeable lithium battery, which includes a negative electrode including the negative electrode active material for a rechargeable lithium battery, and a positive electrode.

The negative electrode active material for a rechargeable lithium battery according to one or more embodiments includes natural graphite, and can exhibit excellent rechargeable lithium battery performance by significantly reducing resistance and providing high energy density and boost charging performance.

**BRIEF DESCRIPTION OF THE DRAWINGS**

The above and other objects, features and advantages of the present disclosure will become more apparent to those of ordinary skill in the art by describing exemplary embodiments thereof in detail with reference to the accompanying drawings, in which:

FIG. 1 is a schematic diagram of a negative electrode active material for a rechargeable lithium battery according to one or more embodiments.

FIGS. 2-5 are cross-sectional views that schematically illustrate a rechargeable lithium battery according to one or more embodiments.

**DETAILED DESCRIPTION**

Hereinafter, embodiments of the present disclosure will be described in detail. However, they are provided as examples, the present disclosure is not limited thereto, and the present disclosure is only defined by the scope of the claims to be described later.

Unless otherwise specified herein, when a part such as a layer, film, region, plate, etc. is described as being "on" another part, it includes not only the case where the part is "directly on" the other part but also the case where there is still another part therebetween. In the drawings, thicknesses of some components are exaggerated for effectively explaining the technical contents. Like reference numerals refer to like elements throughout, and duplicative descriptions thereof may not be provided the specification.

Unless otherwise specified in this specification, anything indicated in the singular may also include the plural. Further, unless otherwise stated, "A or B" may mean "including A, including B, or including A and B."

As used herein, the term "a combination thereof" may mean a mixture, laminate, composite, copolymer, alloy, blend, and reaction product of the components.

The terms "comprise/include," "comprises/includes," "comprising/including," "have," "having," and/or "has," as used in this description, are intended to designate the presence of an embodied aspect, number, step (e.g., act or task), element, and/or a (e.g., any suitable) combination thereof. However, the use of these terms does not preclude or exclude the possibility, presence, and/or addition of one or more other components, features, numbers, steps (e.g., acts or tasks), elements, and/or a (e.g., any suitable) combination thereof. Additionally, the terms "comprise(s)/comprising," "include(s)/including," "have/has/having", or other similar terms include or support the terms "consisting of" and "consisting essentially of," indicating the presence of stated features, integers, steps, operations, elements, and/or components, without or essentially without the presence of other features, integers, steps, operations, elements, components, and/or groups thereof. Moreover, in this context, "consisting essentially of" indicates that any additional components will not materially affect the chemical, physical, optical or electrical properties of the semiconductor film.

It will be understood that, although the terms "first," "second," "third," and/or the like may be utilized herein to describe one or more suitable elements, components, regions, layers and/or sections, these elements, components, regions, layers and/or sections should not be limited by these terms. These terms are only utilized to distinguish one element, component, region, layer or section from another element, component, region, layer, or section. Thus, a first element, component, region, layer, or section described herein may be termed as a second element, component, region, layer or section without departing from the teachings set forth herein.

As utilized herein, the term "and/or" includes any, and all, combinations of one or more of the associated listed items. Expressions such as "at least one of," "one of," and "selected from," if (e.g., when) preceding a list of elements, modify the entire list of elements and do not modify the individual elements of the list. For example, the expressions "at least one of a to c," "at least one of a, b or c," and "at least one of a, b and/or c" may indicate only a, only b, only c, both (e.g., simultaneously) a and b, both (e.g., simultaneously) a and c, both (e.g., simultaneously) b and c, all of a, b, and c, or variations thereof.

Spatially relative terms, such as "beneath," "below," "lower," "above," "upper" and/or the like, may be utilized herein to easily describe the relationship between one element or feature and another element or feature. It will be understood that the spatially relative terms are intended to encompass different orientations of a device in utilization or operation in addition to the orientation illustrated in the drawings. For example, if (e.g., when) the device in the drawings is turned over, elements described as "below" or "beneath" other elements or features will be oriented "above" the other elements or features. Thus, the example term "below" can encompass both (e.g., simultaneously) the orientations of above and below. The device may be otherwise oriented (rotated 90 degrees or at other orientations), and the spatially relative terms utilized herein may be interpreted accordingly.

The terminology utilized herein is utilized for the purpose of describing particular embodiments only, and is not intended to limit the present disclosure. Unless otherwise defined, all terms (including chemical, technical and scientific terms) utilized herein have the same meaning as commonly understood by one of ordinary skill in the art to which this disclosure pertains. It will be further understood that terms, such as those defined in commonly utilized dictionaries, should be interpreted as having a meaning that is consistent with their meaning in the context of the related art and the present disclosure, and will not be interpreted in an idealized or overly formal sense.

Example embodiments are described herein with reference to cross-sectional views, which are schematic views of idealized embodiments. As such, variations from the shapes of the illustrations as a result, for example, of manufacturing techniques and/or tolerances, are to be expected. Thus, embodiments described herein should not be construed as being limited to the particular shapes of regions as illustrated herein but are to include deviations in shapes that result, for example, from manufacturing. For example, a region illustrated or described as flat may, typically, have rough and/or nonlinear features. Moreover, sharp angles that are illustrated may be rounded. Thus, the regions illustrated in the drawings are schematic in nature and their shapes are not intended to illustrate the precise shape of a region and are not intended to limit the scope of the present claims.

The term "may" will be understood to refer to "one or more embodiments of the present disclosure," some of which include the described element and some of which exclude that element and/or include an alternate element. Similarly, alternative language such as "or" refers to "one or more embodiments of the present disclosure," each including a corresponding listed item.

In the context of the present application and unless otherwise defined, the terms "use," "using," and "used" may be considered synonymous with the terms "utilize," or "utilization," "utilizing," and "utilized," respectively.

Here, the term "particle size/diameter D50" refers to the average particle size/diameter, which means the size/diameter of particles with a cumulative volume of 50% by volume in the particle size distribution. The particle size distribution may be measured by methods well known to those skilled in the art. For example, the particle size distribution may be measured using a particle size analyzer, a transmission electron micrograph, or a scanning electron micrograph. In another method, an D50 value may be obtained by measuring the particle size/diameter using a measuring device using dynamic light scattering, performing data analysis to count the number of particles for each particle size range, and then calculating the particle size/diameter therefrom. Alternatively, D50 may be measured using a laser diffraction method. More specifically, when measuring by laser diffraction, after the particles to be measured are dispersed in a dispersion medium, the particles may be introduced into a commercially available laser diffraction particle size/diameter measuring device (e.g., Microtrac MT 3000) and irradiated with ultrasonic waves of about 28 kHz at an output of 60 W, and the D50 based on 50% of the particle size/diameter distribution in the measurement device may be calculated.

Negative electrode active material The negative electrode active material for a rechargeable lithium battery according to one or more embodiments may provide low resistance, high energy density, and boost charging performance. The negative electrode active material includes natural graphite, and is capable of providing significantly low resistance, high energy density, and boost charging performance by improving the problem of the high resistance of natural graphite.

The negative electrode active material for a rechargeable lithium battery according to one or more embodiments includes natural graphite containing a secondary particle in which primary particles are assembled, and a coating layer that surrounds the secondary particle and includes amorphous carbon, wherein the negative electrode active material has an orientation degree of 90 or less and a d002 of 3.356 angstrom (Å) to 3.360Å.

The "orientation degree" used herein may refer to the ratio of the diffraction peak intensity I (002) of the (002) plane to the diffraction peak intensity I (110) of the (110) plane, as measured by X-ray diffraction analysis using Cu Kα radiation.

The "d002" used herein may refer to the interplanar spacing of the (002) plane of the negative electrode active material, as measured by X-ray diffraction analysis using Cu Kα radiation.

Generally, natural graphite has advantages as a negative electrode active material for a battery, but its high resistance results in poor charging characteristics. Additionally, due to its large number of internal pores, side reactions may adversely affect the long cycle life and expansion rate.

The negative electrode active material is prepared by significantly reducing the average particle diameter of secondary particles of natural graphite into a fine particle form so as to provide low resistance, and in order to offset the reduction in efficiency caused by the increased specific surface area of the secondary particles, is calcined at the temperature described below, thereby reducing the specific surface area and simultaneously providing high efficiency.

In this regard, the negative electrode active material for a rechargeable lithium battery includes the natural graphite, the amorphous carbon, and the coating layer, and satisfies the above orientation degree and d002. Through this, the negative electrode active material for a rechargeable lithium battery improves the capacity of a battery and significantly increases a charge rate (C-rate), thereby increasing the boost charging performance of the rechargeable lithium battery. Although the negative electrode active material for a rechargeable lithium battery includes natural graphite, it can significantly reduce resistance, and provide high energy density, suppression of side reactions with the electrolyte, and an improved lifespan.

As the orientation degree decreases, the edge planes of natural graphite become oriented in random directions, thereby increasing the random orientation of the negative electrode active material. Accordingly, this facilitates the intercalation and deintercalation of lithium ions into the natural graphite secondary particles, thereby improving the capacity characteristics of a rechargeable lithium battery. For example, the orientation degree may be 80 or less, for example, 10, 11, 12, 13, 14, 15, 16, 17, 18, 19, 20, 21, 22, 23, 24, 25, 26, 27, 28, 29, 30, 31, 32, 33, 34, 35, 36, 37, 38, 39, 40, 41, 42, 43, 44, 45, 46, 47, 48, 49, 50, 51, 52, 53, 54, 55, 56, 57, 58, 59, 60, 61, 62, 63, 64, 65, 66, 67, 68, 69, 70, 71, 72, 73, 74, 75, 76, 77, 78, 79, 80, 10 to 80, 20 to 80, 30 to 80, 40 to 80, or 50 to 80. The above orientation degree may be obtained by adjusting the average particle diameter (D50) of the secondary particles and the major axis length of the primary particles. In the negative electrode active material, the average particle diameter (D50) of the secondary particles may be significantly reduced to reduce the high resistance of natural graphite.

As will be described below, the average particle diameter (D50) of the secondary particles in the negative electrode active material is significantly smaller than the major axis length of the primary particles. The secondary particles may be produced by crumpling the primary particles. The negative electrode active material may include amorphous carbon and may be produced by thermal treatment at 2500 °C or more as described below, thereby achieving a high degree of graphitization. A high degree of graphitization may contribute to improving the capacity of the negative electrode active material, and preventing a decrease in efficiency caused by a reduction in the low average particle diameter of secondary particles and an increase in the specific surface area. In this regard, the d002 of the negative electrode active material is 3.356 Å to 3.360 Å. Within the above range, the decrease in battery efficiency caused by the increase in specific surface area of the negative electrode active material including the secondary particles having a relatively small average particle diameter (D50) can be offset and high capacity can be provided. For example, the d002 may be 3.356, 3.3561, 3.3562, 3.3563, 3.3564, 3.3565, 3.3566, 3.3567, 3.3568, 3.3569, 3.357, 3.3571, 3.3572, 3.3573, 3.3574, 3.3575, 3.3576, 3.3577, 3.3578, 3.3579, 3.358, 3.3581, 3.3582, 3.3583, 3.3584, 3.3585, 3.3586, 3.3587, 3.3588, 3.3589, 3.359, 3.3591, 3.3592, 3.3593, 3.3594, 3.3595, 3.3596, 3.3597, 3.3598, 3.3599, 3.360 Å.

According to one or more embodiments, the negative electrode active material may have a Hg cumulative pore volume of 0.01 to 0.06 milliliter per gram (mL/g), for example, 0.01, 0.02, 0.03, 0.04, 0.05, 0.06 mL/g, 0.02 to 0.06 mL/g, or 0.03 to 0.05 mL/g. Within the above range, due to small pores, that is, voids, in the negative electrode active material and the appropriate content of the amorphous carbon therein, a significantly higher negative electrode active material efficiency can be achieved. In addition, the internal area of the negative electrode active material where the reaction with the electrolyte occurs is not excessively large and maintains a sufficient density that allows the electrolyte to be well impregnated, thereby ensuring an appropriate lifespan without excessive side reactions. The Hg cumulative pore volume may be a characteristic of the negative electrode active material prepared by a preparation method to be described below so as to reduce the specific surface area while including small particles of natural graphite.

According to one or more embodiments, the negative electrode active material may have a sphericity (S) of 0.85 or more according to Equation 1 below:

## Equation 1

$$\text{Sphericity (S)} = 4\pi \times A/B^2$$

(in Equation 1, A is the area of the negative electrode active material, and
B is the perimeter of the negative electrode active material)

In one or more embodiments, B may be the perimeter of the actual shape of the negative electrode active material.

The sphericity of the negative electrode active material may be a value obtained when projecting a three-dimensional particle onto a two-dimensional plane. For example, the sphericity may be the ratio of the outline of a real particle and the outline of the circle with the same area as the real one.

In Equation 1, the area A indicates the area of a circle with a circumference, which is the same as the actual perimeter B of particles that has been obtained through the SEM image of an electrode cross-section using a controlled pressure scanning electron microscope (CP-SEM) and calculating the actual perimeter of the particle from the cross-sectional image through the Image J program. In one or more embodiments, the actual perimeter may refer not only to the perimeter when the particle has a perfectly spherical shape, but also the length obtained along the perimeter even when the particle is not perfectly spherical and has uneven regions.

The sphericity of the negative electrode active material may be 0.85 to 1.0, 0.85, 0.86, 0.87, 0.88, 0.89, 0.90, 0.91, 0.92, 0.93, 0.94, 0.95, 0.96, 0.97, 0.98, 0.99, 1.0, 0.90 to 1.0, 0.90 to 0.98, or 0.90 to 0.95. When the sphericity falls in the above range, the expansion rate during charging and discharging may be more effectively inhibited.

The negative electrode active material may have a pellet density of 1.60 to 1.80 gram per cubic centimeter (g/cc). Within the above range, the internal pores of the negative electrode active material and side reactions with the electrolyte can be reduced, thereby improving lifespan characteristics. For example, the pellet density may be 1.60, 1.61, 1.62, 1.63, 1.64, 1.65, 1.66, 1.67, 1.68, 1.69, 1.70, 1.71, 1.72, 1.73, 1.74, 1.75, 1.76, 1.77, 1.78, 1.79, 1.80 g/cc, 1.70 to 1.80 g/cc.

The negative electrode active material may have a tap density of 0.75 to 1.20 g/cc, for example, 0.75, 0.76, 0.77, 0.78, 0.79, 0.80, 0.81, 0.82, 0.83, 0.84, 0.85, 0.86, 0.87, 0.88, 0.89, 0.90, 0.91, 0.92, 0.93, 0.94, 0.95, 0.96, 0.97, 0.98, 0.99, 1.00, 1.01, 1.02, 1.03, 1.04, 1.05, 1.06, 1.07, 1.08, 1.09, 1.10, 1.11, 1.12, 1.13, 1.14, 1.15, 1.16, 1.17, 1.18, 1.19, 1.20 g/cc, 0.75 to 1.0 g/cc, or 0.95 to 1.20 g/cc. Within the above range, the internal pores of the negative electrode active material and side reactions with an electrolyte can be reduced, thereby improving lifespan characteristics. The tap density may be obtained by calculating a mean value by performing a process of applying a pressure of 108N three times using a GeoPyc 1360 Pycnometer (Micromeritics) having a conversion factor of 0.2907 cubic centimeter per millimeter (cm$^3$/mm) and a chamber with a diameter of 19.1 mm.

The negative electrode active material may have a specific surface area of 10 square meters per gram (m$^2$/g) or less, for example, 1, 1.5, 2, 2.5, 3, 3.5, 4, 4.5, 5, 5.5, 6, 6.5, 7, 7.5, 8, 8.5, 9, 9.5, 10 m$^2$/g, 1 to 10 m$^2$/g. Within the above range, the internal pores of the negative electrode active material and side reactions with an electrolyte can be reduced, thereby improving lifespan characteristics. The specific surface area may be a BET specific surface area. The BET specific surface area may be measured using a Macsorb HM Model-1208 (MOUNTECH).

The internal porosity of the negative electrode active material may be 2% or less, for example, 0.1, 0.2, 0.3, 0.4, 0.5, 0.6, 0.7, 0.8, 0.9, 1.0, 1.1, 1.2, 1.3, 1.4, 1.5, 1.6, 1.7, 1.8, 1.9, 2%, 1.8% or less, 1.5% or less, 1.0 to 1.5%, or 1.0 to 1.3%. Within the above range, side reactions of the negative electrode active material with an electrolyte can be inhibited, thereby improving the lifespan of the rechargeable lithium battery. The total pore volume and mesopore volume of the porosity may be quantitatively measured using Barrett-Joyner-Halenda (BJH) analysis equipment.

Hereinafter, the composition of the negative electrode active material for a rechargeable lithium battery will be described in detail.

The negative electrode active material includes natural graphite containing a secondary particle in which primary particles are assembled; and a coating layer that surrounds the secondary particle and includes amorphous carbon.

The natural graphite may be flaky (needle-shaped or scale-shaped) natural graphite.

The primary particles may have a major axis length of 10 to 200 micrometer ($\mu$m), for example, 10, 15, 20, 25, 30, 35, 40, 45, 50, 55, 60, 65, 70, 75, 80, 85, 90, 95, 100, 105, 110, 115, 120, 125, 130, 135, 140, 145, 150, 155, 160, 165, 170, 175, 180, 185, 190, 195, 200 $\mu$m, 10 to 100 $\mu$m, 30 to 60 $\mu$m, or 20 to 50 $\mu$m. Within the above range, the assembly into secondary particles can be easily performed, and the secondary particles can easily achieve a ratio to be described below.

Here, "major axis length" refers to the length of the longest axis between facing sides when the primary particles are formed in a plate shape.

In one or more embodiments, the primary particles may be formed in a plate shape, but the present disclosure is not limited thereto.

The average particle diameter (D50) of the secondary particles may be 30 $\mu$m or less. Within the above range, the secondary particles can easily achieve a ratio to be described below. For example, the average particle diameter (D50) of the secondary particles may be 5 $\mu$m or more and 10 $\mu$m or less, for example 5, 6, 7, 8, 9, 10 $\mu$m, 6 $\mu$m or more and less than 8 $\mu$m. Within the above range, the secondary particles can easily achieve the above orientation degree and sphericity.

The secondary particles may be spherical, but the present disclosure is not limited thereto.

In one or more embodiments, the ratio of the major axis length of the primary particles to the average particle diameter (D50) of the secondary particles may be greater than 2 and 10 or less. Within the above range, the resistance of the active material cannot increase, and boost charging performance cannot be reduced. For example, the ratio may be 2.1 to 10, 2.1, 2.5, 3, 3.5, 4, 4.5, 5, 5.5, 6, 6.5, 7, 7.5, 8, 8.5, 9, 9.5, 10, 3 to 6, 4 to 6, or 5 to 6. Within the above range, the secondary particles can easily achieve the above orientation degree and sphericity.

The amorphous carbon may be contained in the coating layer surrounding the surface of the secondary particle. The amorphous carbon may reduce the internal porosity of the negative electrode active material and inhibit side reactions of the negative electrode active material with the electrolyte, thereby improving rate capability.

The thickness of the coating layer containing the amorphous carbon may be 5 to 50 nanometer (nm), for example, 5,6,7,8,9,10,11,12,13,14,15,16,17,18,19,20,21,22,23,24,25,26,27,28,29,30,31,32,33, 34,35,36,37,38,39,40,41,42,43,44,45,46,47,48,49,50 nm, 10 to 50 nm, or 20 to 50 nm. Within the above range, side reactions with the electrolyte can be inhibited, and rate capability can be improved.

The amorphous carbon may be a mixture of one or more of soft carbon(e.g. pitch carbon), hard carbon, mesophase pitch carbide, and calcined coke.

The amorphous carbon may be additionally present even on the surface of the primary particle.

The natural graphite and the amorphous carbon may be included in a weight ratio of 90:10 to 75:25, for example, 90:10 to 80:20, 90:10 to 85:15, or 90:10 to 88:12 with respect to 100 parts by weight of the total of the natural graphite and the amorphous carbon in the negative electrode active material. Within the above range, side reactions with the electrolyte can be inhibited, and rate capability can be improved.

Hereinafter, a method of preparing the negative electrode active material will be described.

(1) Primary particles having the above major axis length were obtained by grinding a natural graphite raw material having an average particle diameter (D50) of particles of 120 $\mu$m or more. In one or more embodiments, the natural graphite raw material may be ground by applying an air jet milling method. The air jet milling may include grinding the natural graphite raw material at room temperature under a condition of 5 to 20 kilogram per square centimeter (kg/cm$^2$).

(2) The primary particles are assembled into secondary particles using spheroidization equipment.

The assembly is a process for reaching a sphericity of 0.85 or more, and may be achieved using a high-strength mixer equipped with a high-speed rotating rotor and a stator. In the spheroidization process, the average particle diameter (D50) of the secondary particles can be adjusted by varying a pressure, a shear rate or the like.

(3) The prepared secondary particles are mixed with an amorphous carbon precursor.

The amorphous carbon precursor is not particularly limited as long as it is a material that forms a carbide. For example, the precursor may include one or more of a phenolic resin, a furan resin, an epoxy resin, a polyacrylonitrile resin, a polyamide resin, a polyimide resin, a polyamideimide resin, a synthetic pitch, a petroleum pitch, coal pitch, and tar.

During the mixing, the natural graphite and the amorphous carbon in the final product, that is, the negative electrode active material may be added to be present in the above-described weight ratio.

(4) The negative electrode active material is obtained by calcining and thermally treating the mixture obtained by the mixing.

The thermal treatment may be performed at 2500 °C or more, for example, 2500 °C to 3500 °C, for example, 2500 °C to 3000 °C. Within the above range, the negative electrode active material including the secondary particles satisfying the above-mentioned ratio can easily reach the above orientation degree, d002, and sphericity.

The thermal treatment may be maintained for 1 to 5 hours, for example, 1 to 4 hours, 1 to 3 hours, or 2 to 3 hours.

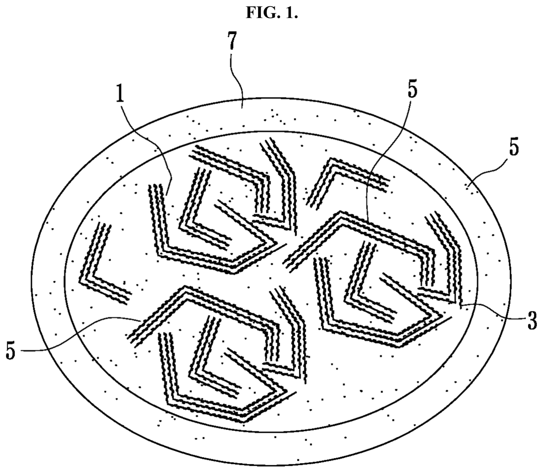

FIG. 1 is a schematic diagram of a negative electrode active material according to one or more embodiments.

Referring to FIG. 1, the negative electrode active material includes natural graphite including secondary particles 3 in which a plurality of primary particles 1 are assembled; amorphous carbon 5 present on the surface of the primary particles, and a coating layer 7 that surrounds the secondary particle 3 and includes the amorphous carbon 5. Referring to FIG. 1, as the secondary particles 3 are assembled by spherically forming the primary particles 1 in a bent shape, natural graphite has a smaller size and a dense internal structure, such that the internal pores may be minimized, side reactions with the electrolyte may be reduced, and the cycle life may be improved.

A negative electrode plate for a rechargeable lithium battery according to another embodiment includes the negative electrode active material for a rechargeable lithium battery according to one or more embodiments.

In one or more embodiments, the negative electrode plate may include 95 wt% or more, for example, 95 to 100 wt%, or 100 wt% of the above-described negative electrode active material for a rechargeable lithium battery in the negative electrode active material.

The negative electrode plate may further include one or more of a binder and a conductive material. The binder and the conductive material will be described below.

A rechargeable lithium battery according to still another embodiment includes a negative electrode active material for a rechargeable lithium battery.

In one or more embodiments, the rechargeable lithium battery may include a negative electrode including the negative electrode active material for a rechargeable lithium battery, and a positive electrode.

**Negative electrode**

The negative electrode for a rechargeable lithium battery may include a current collector and a negative electrode active material layer on the current collector. The negative electrode active material layer may include a negative electrode active material, and may further include a binder and/or a conductive material (e.g., an electrically conductive material).

For example, the negative electrode active material layer may include about 90 wt% to about 99 wt% of the negative electrode active material, about 0.5 wt% to about 5 wt% of the binder, and about 0 wt% to about 5 wt% of the conductive material.

The negative active material includes the negative active material according to the above-described embodiment. In one specific example, the negative active material according to the above-described embodiment may be included in an amount of 95 wt% or more, for example, 95 to 100 wt%, or 100 wt%, of the total negative active material in the negative active material layer.

The negative electrode active material layer may further include a material that reversibly intercalates/deintercalates lithium ions, a lithium metal, a lithium metal alloy, a material capable of doping/dedoping lithium, or a transition metal oxide, in addition to the negative active material according to the above-described embodiment.

The material that reversibly intercalates/deintercalates lithium ions may include a carbon-based negative electrode active material, such as, for example, crystalline carbon, amorphous carbon or a combination thereof. The crystalline carbon may be graphite such as non-shaped, sheet-shaped, flake-shaped, sphere-shaped, or fiber-shaped, natural graphite or artificial graphite. The amorphous carbon may be a soft carbon, a hard carbon, a mesophase pitch carbonization product, calcined coke, and the like.

The lithium metal alloy includes an alloy of lithium and a metal selected from among Na, K, Rb, Cs, Fr, Be, Mg, Ca, Sr, Si, Sb, Pb, In, Zn, Ba, Ra, Ge, Al, and Sn.

The material capable of doping/dedoping lithium may be a Si-based negative electrode active material or a Sn-based negative electrode active material. The Si-based negative electrode active material may include silicon, a silicon-carbon composite, $SiO_x$ $(0 < x < 2)$, a Si-Q alloy (where Q is selected from among an alkali metal, an alkaline-earth metal, a Group 13 element, a Group 14 element (excluding Si), a Group 15 element, a Group 16 element, a transition metal, a rare earth element, and a combination thereof). The Sn-based negative electrode active material may include Sn, $SnO_2$, a Sn-based alloy, or a combination thereof.

The silicon-carbon composite may be a composite of silicon and amorphous carbon. According to an embodiment, the silicon-carbon composite may be in a form of silicon particles and amorphous carbon coated on the surface of the silicon particles. For example, the silicon-carbon composite may include a secondary particle (core) in which primary silicon particles are assembled, and an amorphous carbon coating layer (shell) on the surface of the secondary particle. The amorphous carbon may also be between the primary silicon particles, and, for example, the primary silicon particles may be coated with the amorphous carbon. The secondary particle may exist dispersed in an amorphous carbon matrix.

The silicon-carbon composite may further include crystalline carbon. For example, the silicon-carbon composite may include a core including crystalline carbon and silicon particles and an amorphous carbon coating layer on a surface of the core.

The Si-based negative electrode active material or the Sn-based negative electrode active material may be used in combination with a carbon-based negative electrode active material.

The binder may serve to attach the negative electrode active material particles well to each other and also to attach the negative electrode active material well to the current collector.

The binder may include a non-aqueous binder, an aqueous binder, a dry binder, or a combination thereof.

The non-aqueous binder may include polyvinyl chloride, carboxylated polyvinyl chloride, polyvinyl fluoride, an ethylene propylene copolymer, polystyrene, polyurethane, polytetrafluoroethylene, polyvinylidene fluoride, polyethylene, polypropylene, poly amideimide, polyimide, or a combination thereof.

The aqueous binder may be selected from among a styrene-butadiene rubber, a (meth)acrylated styrene-butadiene rubber, a (meth)acrylonitrile-butadiene rubber, (meth)acrylic rubber, a butyl rubber, a fluoro rubber, polyethylene oxide, polyvinylpyrrolidone, polyepichlorohydrine, polyphosphazene, poly(meth)acrylonitrile, an ethylene propylene diene copolymer, polyvinylpyridine, chlorosulfonated polyethylene, latex, a polyester resin, a (meth)acrylic resin, a phenol resin, an epoxy resins, polyvinyl alcohol, and a combination thereof.

When an aqueous binder is used as the negative electrode binder, a cellulose-based compound capable of imparting viscosity may be further included. The cellulose-based compound may include at least one of carboxymethyl cellulose, hydroxypropylmethyl cellulose, methyl cellulose, or an alkali metal salt thereof. The alkali metal may include Na, K, or Li.

The dry binder may be a polymer material that is capable of being fibrous. For example, the dry binder may be polytetrafluoroethylene, polyvinylidene fluoride, a polyvinylidene fluoride-hexafluoropropylene copolymer, polyethylene oxide, or a combination thereof.

The conductive material may be used to impart conductivity (e.g., electrical conductivity) to the electrode. Any material that does not cause chemical change (e.g., does not cause an undesirable chemical change in the rechargeable lithium battery) and that conducts electrons can be used in the battery. Non-limiting examples thereof may include a carbon-based material such as natural graphite, artificial graphite, carbon black, acetylene black, ketjen black, a carbon fiber, a carbon nanofiber, and a carbon nanotube; a metal-based material including copper, nickel, aluminum, silver, etc. in a form of a metal powder or a metal fiber; a conductive polymer such as a polyphenylene derivative; or a mixture thereof.

The negative current collector may include a copper foil, a nickel foil, a stainless steel foil, a titanium foil, a nickel foam, a copper foam, a polymer substrate coated with a conductive metal, or a combination thereof.

## Positive electrode

A positive electrode for a rechargeable lithium battery may include a current collector and a positive electrode active material layer on the current collector. The positive electrode active material layer may include a positive electrode active material and may further include a binder and/or a conductive material. For example, the positive electrode may further include an additive that can serve as a sacrificial positive electrode.

## Positive electrode active material

The positive electrode active material may include a compound (lithiated intercalation compound) that is capable of intercalating and deintercalating lithium. Specifically, at least one of a composite oxide of lithium and a metal selected from among cobalt, manganese, nickel, and combinations thereof may be used.

The composite oxide may be a lithium transition metal composite oxide. Specific examples of the composite oxide may include lithium nickel-based oxide, lithium cobalt-based oxide, lithium manganese-based oxide, lithium iron phosphate-based compound, cobalt-free nickel-manganese-based oxide, or a combination thereof.

As an example, the following compounds represented by any one of the following Chemical Formulas may be used. $Li_aA_{1-b}X_bO_{2-c}D_e$ ($0.90 \leq a \leq 1.8$, $0 \leq b \leq 0.5$, and $0 \leq c \leq 0.05$); $Li_aMn_{2-b}X_bO_{4-c}D_c$ ($0.90 \leq a \leq 1.8$, $0 \leq b \leq 0.5$, and $0 \leq c \leq 0.05$); $Li_aNi_{1-b-c}Co_bX_cO_{2-\alpha}D_\alpha$ ($0.90 \leq a \leq 1.8$, $0 \leq b \leq 0.5$, $0 \leq c \leq 0.5$, and $0 < \alpha < 2$); $Li_aNi_{1-b-c}Mn_bX_cO_{2-\alpha}D_\alpha$ ($0.90 \leq a \leq 1.8$, $0 \leq b \leq 0.5$, $0 \leq c \leq 0.5$, and $0 < \alpha < 2$); $Li_aNi_bCo_cL^1_dG_eO_2$ ($0.90 \leq a \leq 1.8$, $0 \leq b \leq 0.9$, $0 \leq c \leq 0.5$, $0 \leq d \leq 0.5$, and $0 \leq e \leq 0.1$); $Li_aNiG_bO_2$ ($0.90 \leq a \leq 1.8$ and $0.001 \leq b \leq 0.1$); $Li_aCoG_bO_2$ ($0.90 \leq a \leq 1.8$ and $0.001 \leq b \leq 0.1$); $Li_aMn_{1-b}G_bO_2$ ($0.90 \leq a \leq 1.8$ and $0.001 \leq b \leq 0.1$); $Li_aMn_2G_bO_4$ ($0.90 \leq a \leq 1.8$ and $0.001 \leq b \leq 0.1$); $Li_aMn_{1-g}G_gPO_4$ ($0.90 \leq a \leq 1.8$ and $0 \leq g \leq 0.5$); $Li_{(3-f)}Fe_2(PO_4)_3$ ($0 \leq f \leq 2$); or $Li_aFePO_4$ ($0.90 \leq a \leq 1.8$).

In the above Chemical Formulas, A is Ni, Co, Mn, or a combination thereof; X is Al, Ni, Co, Mn, Cr, Fe, Mg, Sr, V, a rare earth element or a combination thereof; D is O, F, S, P, or a combination thereof; G is Al, Cr, Mn, Fe, Mg, La, Ce, Sr, V, or a combination thereof; and $L^1$ is Mn, Al, or a combination thereof.

The positive electrode active material may be, for example, a high nickel-based positive electrode active material having a nickel content of greater than or equal to about 80 mol%, greater than or equal to about 85 mol%, greater than or equal to about 90 mol%, greater than or equal to about 91 mol%, or greater than or equal to about 94 mol% and less than or equal to about 99 mol% based on 100 mol% of the metal excluding lithium in the lithium transition metal composite oxide. The high-nickel-based positive electrode active material may be capable of realizing high capacity and can be applied to a high-capacity, high-density rechargeable lithium battery.

An amount of the positive electrode active material may be about 90 wt% to about 99.5 wt% based on 100 wt% of the positive electrode active material layer. Amounts of the binder and the conductive material may be about 0.5 wt% to about 5 wt%, respectively, based on 100 wt% of the positive electrode active material layer.

The binder serves to attach the positive electrode active material particles well to each other and also to attach the positive electrode active material well to the current collector. Examples of the binder may include polyvinyl alcohol, carboxymethyl cellulose, hydroxypropyl cellulose, diacetyl cellulose, polyvinylchloride, carboxylated polyvinylchloride, polyvinylfluoride, a polymer including ethylene oxide, polyvinylpyrrolidone, polyurethane, polytetrafluoroethylene, polyvinylidene fluoride, polyethylene, polypropylene, a styrene-butadiene rubber, a (meth)acrylated styrene-butadiene rubber, an epoxy resin, a (meth)acrylic resin, a polyester resin, nylon, and the like, as non-limiting examples.

The conductive material may be used to impart conductivity (e.g., electrical conductivity) to the electrode. Any material that does not cause chemical change (e.g., does not cause an undesirable chemical change in the rechargeable lithium battery) and conducts electrons can be used in the battery. Examples of the conductive material may include a carbon-based material such as natural graphite, artificial graphite, carbon black, acetylene black, ketjen black, a carbon fiber, a carbon nanofiber, and carbon nanotube; a metal-based material containing copper, nickel, aluminum, silver, etc., in a form of a metal powder or a metal fiber; a conductive polymer such as a polyphenylene derivative; or a mixture thereof.

Al may be used as the current collector, but is not limited thereto.

The rechargeable lithium battery may further include an electrolyte solution.

**Electrolyte Solution**

The electrolyte solution for a rechargeable lithium battery may include a non-aqueous organic solvent and a lithium salt.

The non-aqueous organic solvent may serve as a medium for transmitting ions taking part in the electrochemical reaction of a battery.

The non-aqueous organic solvent may be a carbonate-based, ester-based, ether-based, ketone-based, or alcohol-based solvent, an aprotic solvent, or a combination thereof.

The carbonate-based solvent may include dimethyl carbonate (DMC), diethyl carbonate (DEC), dipropyl carbonate (DPC), methylpropyl carbonate (MPC), ethylpropyl carbonate (EPC), methylethyl carbonate (MEC), ethylene carbonate (EC), propylene carbonate (PC), butylene carbonate (BC), and the like.

The ester-based solvent may include methyl acetate, ethyl acetate, n-propyl acetate, dimethyl acetate, methyl propionate, ethyl propionate, decanolide, mevalonolactone, valerolactone, caprolactone, and the like.

The ether-based solvent may include dibutyl ether, tetraglyme, diglyme, dimethoxyethane, 2-methyltetrahydrofuran, 2,5-dimethyltetrahydrofuran, tetrahydrofuran, and the like. In addition, the ketone-based solvent may include cyclohexanone, and the like. The alcohol-based solvent may include ethanol, isopropyl alcohol, and the like and the aprotic solvent may include nitriles such as R-CN (wherein R is a C2 to C20 linear, branched, or cyclic hydrocarbon group, a double bond, an aromatic ring, or an ether bond, and the like; amides such as dimethylformamide; dioxolanes such as 1,3-dioxolane, 1,4-dioxolane, and the like; sulfolanes, and the like.

The non-aqueous organic solvents may be used alone or in combination of two or more.

In addition, when using a carbonate-based solvent, a cyclic carbonate and a chain carbonate may be mixed and used, and the cyclic carbonate and the chain carbonate may be mixed in a volume ratio of about 1:1 to about 1:9.

The lithium salt dissolved in the organic solvent supplies lithium ions in a battery, enables a basic operation of a rechargeable lithium battery, and improves transportation of the lithium ions between positive and negative electrodes. Examples of the lithium salt include at least one selected from among $LiPF_6$, $LiBF_4$, $LiSbF_6$, $LiAsF_6$, $LiClO_4$, $LiAlO_2$, $LiAlCl_4$, $LiPO_2F_2$, LiCl, LiI, $LiN(SO_3C_2F_5)_2$, $Li(FSO_2)_2N$ (lithium bis(fluorosulfonyl)imide, LiFSI), $LiC_4F_9SO_3$, $LiN(C_xF_{2x+1}SO_2)$ $(C_yF_{2y+1}SO_2)$ (wherein x and y are integers of 1 to 20), lithium trifluoromethane sulfonate, lithium tetrafluoroethanesulfonate, lithium difluorobis(oxalato)phosphate (LiDFOBP), and lithium bis(oxalato) borate (LiBOB).

The lithium rechargeable battery may further include a separator.

**Separator**

Depending on the type of the rechargeable lithium battery, a separator may be present between the positive electrode and the negative electrode. The separator may include polyethylene, polypropylene, polyvinylidene fluoride, or a multilayer film of two or more layers thereof, and a mixed multilayer film such as a polyethylene/polypropylene two-layer separator, polyethylene/polypropylene/polyethylene three-layer separator, polypropylene/polyethylene/polypropylene three-layer separator, and the like.

The separator may include a porous substrate and a coating layer including an organic material, an inorganic material, or a combination thereof on one or both surfaces of the porous substrate.

The porous substrate may be a polymer film formed of any one selected polymer polyolefin such as polyethylene and polypropylene, polyester such as polyethylene terephthalate and polybutylene terephthalate, polyacetal, polyamide, polyimide, polycarbonate, polyether ketone, polyarylether ketone, polyether ketone, polyetherimide, polyamideimide, polybenzimidazole, polyethersulfone, polyphenylene oxide, a cyclic olefin copolymer, polyphenylene sulfide, polyethylene naphthalate, a glass fiber, TEFLON, and polytetrafluoroethylene, or a copolymer or mixture of two or more thereof.

The organic material may include a polyvinylidene fluoride-based polymer or a (meth)acrylic polymer.

The inorganic material may include inorganic particles selected from among $Al_2O_3$, $SiO_2$, $TiO_2$, $SnO_2$, $CeO_2$, MgO, NiO, CaO, GaO, ZnO, $ZrO_2$, $Y_2O_3$, $SrTiO_3$, $BaTiO_3$, $Mg(OH)_2$, boehmite, and a combination thereof, but is not limited thereto.

The organic material and the inorganic material may be mixed in one coating layer, or a coating layer including an organic material and a coating layer including an inorganic material may be stacked.

**The rechargeable lithium battery**

The rechargeable lithium battery may be classified into cylindrical, prismatic, pouch, or coin-type batteries, and the like depending on their shape.

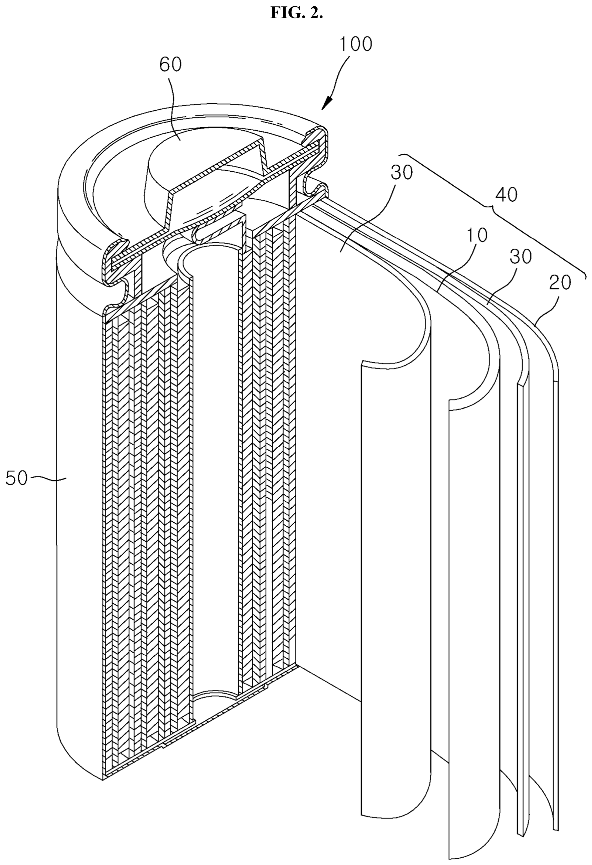

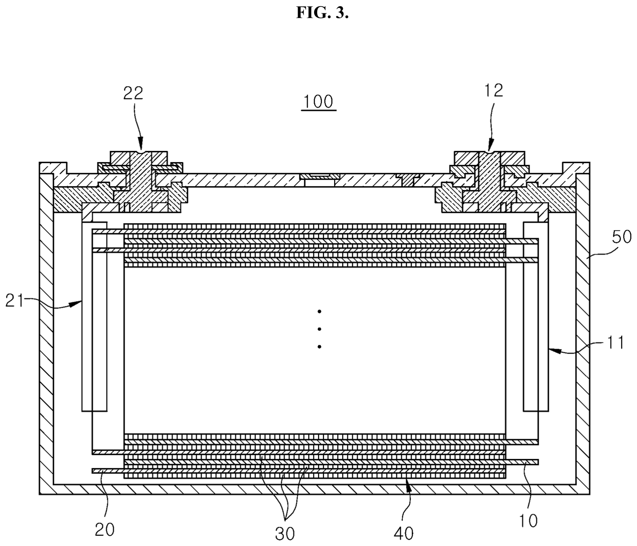

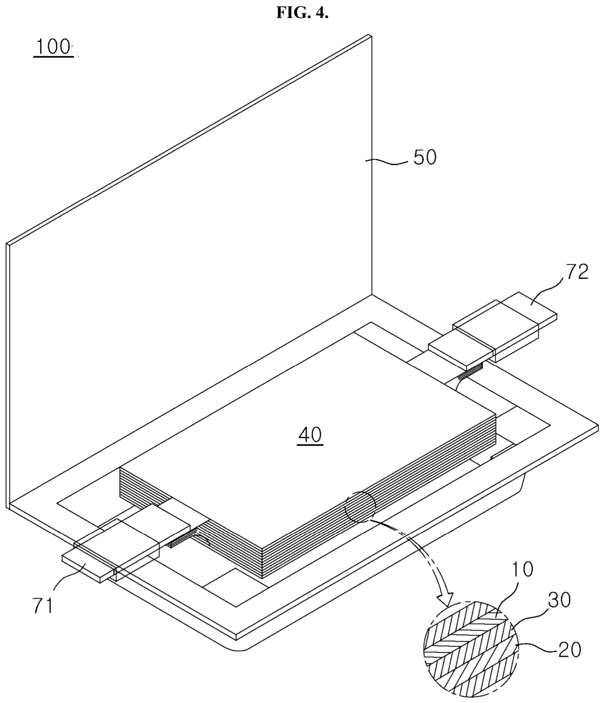

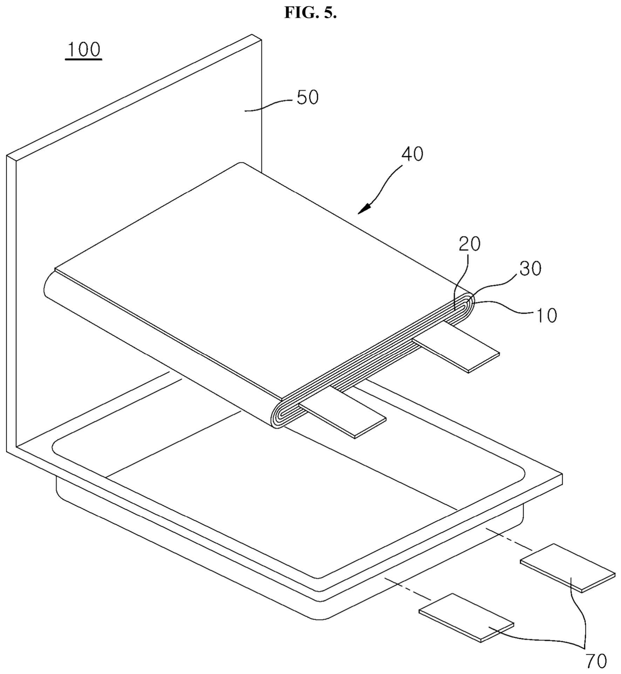

FIGS. 2 to 5 are schematic views illustrating a rechargeable lithium battery according to an embodiment. FIG. 2 shows a cylindrical battery, FIG. 3 shows a prismatic battery, and FIGS. 4 and 5 show pouch-type batteries. Referring to FIGS. 2 to 5, the rechargeable lithium battery 100 may include an electrode assembly 40 including a separator 30 between a positive electrode 10 and a negative electrode 20, and a case 50 in which the electrode assembly 40 is included. The positive electrode 10, the negative electrode 20, and the separator 30 may be impregnated with an electrolyte solution (not shown). The rechargeable lithium battery 100 may include a sealing member 60 sealing the case 50, as shown in FIG. 2. In FIG. 3, the rechargeable lithium battery 100 may include a positive lead tab 11, a positive terminal 12, a negative lead tab 21, and a negative terminal 22. As shown in FIGS. 4 and 5, the rechargeable lithium battery 100 may include an electrode tab 70, which may be, for example, a positive electrode tab 71 and a negative electrode tab 72 serving as an electrical path for inducing the current formed in the electrode assembly 40 to the outside.

The rechargeable lithium battery according to an embodiment may be applied to automobiles, mobile phones, and/or various types of electric devices, as non-limiting examples.

Terms such as "substantially," "about," and "approximately" are used as relative terms and not as terms of degree, and are intended to account for the inherent deviations in measured or calculated values that would be recognized by those of ordinary skill in the art. They may be inclusive of the stated value and an acceptable range of deviation as determined by one of ordinary skill in the art, considering the limitations and error associated with measurement of that quantity. For example, "about" may refer to one or more standard deviations, or $\pm$ 30%, 20%, 10%, 5% of the stated value.

Numerical ranges disclosed herein include and are intended to disclose all subsumed sub-ranges of the same numerical precision. For example, a range of "1.0 to 10.0" includes all subranges having a minimum value equal to or greater than 1.0 and a maximum value equal to or less than 10.0, such as, for example, 2.4 to 7.6. Applicant therefore reserves the right to amend this specification, including the claims, to expressly recite any sub-range subsumed within the ranges expressly recited herein.

Hereinafter, examples and comparative examples of the present disclosure will be described. However, the following examples are merely exemplary, and the present disclosure is not limited thereto.

**EXAMPLES**

**Example 1**

A flaky natural graphite raw material having an average particle diameter (D50) of 120 $\mu$m was ground into primary particles having a plate-like shape and a major axis length of 30 $\mu$m using an air jet milling method. The primary particles were assembled into secondary particles which are spherical and have an average particle diameter (D50) of 7 $\mu$m, using spheroidization equipment. Pitch carbon was added to the secondary particles, mixed, and thermally treated in a 3000 °C furnace for 2 hours, thereby preparing a negative electrode active material. The pitch carbon was added so that the natural graphite : amorphous carbon weight ratio in the first negative electrode active material was 90:10.

A negative electrode active material slurry was prepared by mixing 97.5 wt% of the prepared negative electrode active material, 1.5 wt% of styrene butadiene rubber as a binder, and 1.0 wt% of carboxy methylcellulose as an additive in distilled water.

A negative electrode was manufactured by coating a copper current collector with the negative electrode active material slurry, and drying and rolling the slurry-coated current collector.

A half-cell was manufactured using the negative electrode plate, a lithium metal counter electrode, and an electrolyte. The electrolyte is a mixed solvent of ethylene carbonate and dimethyl carbonate (3:7 by volume) in which 1M $LiPF_6$ is dissolved.

**Example 2**

A negative electrode active material was prepared, and then a negative electrode and a half-cell were manufactured in the same manner as in Example 1 except that spheroidization conditions in Example 1 were modified.

**Example 3**

A negative electrode active material was prepared, and then a negative electrode and a half-cell were manufactured in the same manner as in Example 1 except that spheroidization conditions in Example 1 were modified.

**Example 4**

A negative electrode and a half-cell were manufactured in the same manner as in Example 1, except that 1.5 wt% of polyvinylidene fluoride (PVDF) was used instead of 1.5 wt% of styrene butadiene rubber as a binder used in Example 1.

**Example 5**

A negative electrode active material was prepared in the same manner as in Example 1. A negative electrode plate for a dry electrode was manufactured using the prepared negative electrode active material.

Specifically, 97.5 wt% of the prepared negative electrode active material and 2.5 wt% of polytetrafluoroethylene (PTFE) as a binder were put into a blender without a solvent, and mixed at 10,000 rpm for 1 minute, thereby obtaining a mixture. The resulting mixture was put into a kneader and kneaded at 110 °C at a speed of 60 rpm for 5 minutes to obtain a mixed mass. The mixed mass was then put into a blender and pulverized at 10,000 rpm for 40 seconds, thereby obtaining an electrode powder. Afterward, the electrode powder was repeatedly pressed using a calendar roll (roll diameter: 200 mm, roll temperature: 80 °C) to obtain an active material layer (thickness: 150 $\mu$m). The prepared active material layer was laminated onto a copper current collector with a primer layer, and rolled to manufacture a negative electrode. The manufactured negative electrode was used to manufacture a half-cell in the same manner as in Example 1.

**Comparative Example 1**

A negative electrode active material, a negative electrode and a half-cell were manufactured in the same manner as in Example 1, except that pitch carbon was not added in Example 1.

**Comparative Example 2**

A flaky natural graphite raw material with an average particle diameter (D50) greater than 120 $\mu$m was pulverized into primary particles with an average particle diameter (D50) of 120 $\mu$m by an air jet milling method. The primary particles were assembled into spherical secondary particles with an average particle diameter (D50) of 20 $\mu$m using spheroidization equipment. A negative electrode active material was prepared by adding pitch carbon to the secondary particles and mixing them and thermally treating the resulting mixture in a 1200 °C furnace for 2 hours. The pitch carbon was added so that the natural graphite : amorphous carbon weight ratio in the first negative electrode active material was 90:10.

A negative electrode and a half-cell were manufactured in the same manner as in Example 1 using the prepared negative electrode active material.

**Comparative Example 3**

A negative electrode active material slurry and a half-cell were manufactured in the same manner as in Example 1 using artificial graphite having an average particle diameter (D50) of 15 $\mu$m as a negative electrode active material.

**Comparative Example 4**

A flaky natural graphite raw material with an average particle diameter (D50) of 80 $\mu$m was pulverized into primary particles with a major axis length of 7 $\mu$m by an air jet milling method. The primary particles were assembled into spherical secondary particles with an average particle diameter (D50) of 15.6 $\mu$m using spheroidization equipment. A negative electrode active material was prepared by adding pitch carbon to the secondary particles and mixing them and thermally treating the resulting mixture in a 1200 °C furnace for 2 hours. The pitch carbon was added so that the natural graphite : amorphous carbon weight ratio in the first negative electrode active material was 90:10.

A negative electrode and a half-cell were manufactured in the same manner as in Example 1 using the prepared negative electrode active material.

## Experimental Examples

### Pellet density (units: gram per cubic centimeter (g/cc))

A pellet density was measured using a pellet density meter, Carver 4350.L (CARVER). After adding 1.0 g each of the negative electrode active materials of Examples and Comparative Examples to a mold, the density of a powder was measured while maintaining the mold under a pressure of 2.0 tons for 30 seconds.

### Orientation degree

An orientation degree was measured using a XRD analyzer, X'Pert Pro (PANalytical). A ratio of the diffraction peak intensity I (002) of the (002) plane to the diffraction peak intensity I (110) of the (110) plane was measured for each of the negative electrode active materials of Examples and Comparative Examples by X-ray diffraction analysis using $CuK\alpha$ radiation.

### d002 (units: angstrom (Å))

d002 was measured using an XRD analyzer, X'Pert Pro (PANalytical). The interplanar spacing of the (002) plane was measured for each of the negative electrode active materials of Examples and Comparative Examples by X-ray diffraction analysis using $CuK\alpha$ radiation.

### Hg cumulative pore volume (units: milliliter per gram (mL/g))

An Hg cumulative pore volume was measured for each of the negative electrode active materials of Examples and Comparative Examples using an Hg Intrusion Porosimeter (AutoPore V (Micromeritics), Mercury intrusion porosimetry). The negative electrode active material was placed in a specialized sample cup, surrounded by mercury, and a pressure in the range of 0.2 to 60,000 psi was applied to intrude mercury into the negative electrode active material. The mercury porosity was then measured by monitoring the change in volume of mercury in the capillary stem reservoir. The size of pores that can be measured by the above-described method is 0.01 $\mu$m to 100 $\mu$m, and generally, in the negative electrode active material, pores with a size of 0.01 $\mu$m or more and 5 $\mu$m or less are considered as pores in the active material.

### Sphericity:

Sphericity was measured using a sphericity analyzer, Morphologi 4 (Malvern). For each of the negative electrode active materials of Examples and Comparative Examples, the A value and the B value in Equation 1 were obtained, followed by calculating the sphericity according to Equation 1.

### Capacity (units: mAh/g) and charge C-rate (units: %)

The manufactured half-cells were charged and discharged at 0.1C to measure their charge and discharge capacities. The measured discharge capacities are shown in Table 1 below, and the Coulombic efficiency (discharge capacity/charge capacity x 100%) was measured.

The manufactured half-cells were subjected to one cycle of 0.2C constant current (CC)/constant voltage (CV) charging and 0.2C discharging, one cycle of 0.5C CC charging and 0.2C discharging, one cycle of 1C CC charging and 0.2C discharging, and one cycle of 2C CC charging and 0.2C discharging, and then charging characteristics were calculated. Here, the charging conditions were a 10 mV cutoff for the CC phase and a 15-hour cutoff for the CV phase, and the discharging condition was a 1.5V cutoff. The charging characteristics were measured at each C-rate. The charging characteristics were evaluated by calculating the ratio of the 2C CC charge capacity to the 0.2C CC charge capacity.

**Direct current internal resistance (DC-IR, units: ohm (Ω))**

Each of the half-cells manufactured according to Examples and Comparative Examples was subjected to one charge/discharge cycle under the following conditions: charging with constant current/constant voltage (CC/CV) at 0.2C, with 10 mV and 0.01C as the cut-off conditions; resting for 10 minutes; discharging with constant current (CC) at 0.2C, with 1.5V as the cut-off condition; and resting for 10 minutes. Afterward, while flowing a 3C current for 1 second at SOC50 (when the total charge capacity of a cell is considered 100%, it means the cell is charged 50% of its capacity, which means that in the state of discharge, the cell is discharged by 50%), the generating voltage drop (V) was measured. A resistance value was calculated from the measured voltage and the applied current (3C), and the result was expressed as direct current internal resistance (DC-IR).

**Rion (units: ohm (Ω)):**

A symmetric cell was manufactured with the manufactured negative electrode plate to measure EIS, from which Rion can be calculated through a Nyquist plot.
The evaluation results are shown in Table 1 below.

Table 1

| | Example | | | | | Comparative Example | | | |
|---|---|---|---|---|---|---|---|---|---|
| | 1 | 2 | 3 | 4 | 5 | 1 | 2 | 3 | 4 |
| Major axis length of primary particle (μm) | 30 | 30 | 30 | 30 | 30 | 30 | 120 | - | 7 |
| D50 of secondary particle (μm) | 7 | 10 | 5 | 7 | 7 | 7 | 20 | 15 | 15.6 |
| Pellet density (g/cc) | 1.75 | 1.80 | 1.60 | 1.75 | 1.75 | 1.9 | 1.8 | 1.55 | 1.78 |
| Orientation degree I(002)/ I(110) | 60 | 80 | 55 | 60 | 60 | 70 | 110 | 100 | 120 |
| d002 (Å) | 3.356 9 | 3.356 7 | 3.357 3 | 3.356 9 | 3.356 9 | 3.355 8 | 3.355 9 | 3.360 1 | 3.356 1 |
| Sphericity | 0.95 | 0.95 | 0.90 | 0.95 | 0.95 | 0.95 | 0.95 | 0.92 | 0.95 |
| Pore volume (Hg cumulative pore volume) (mL/g) | 0.035 | 0.041 | 0.037 | 0.035 | 0.035 | 0.158 | 0.065 | 0.103 | 0.066 |
| Capacity(mAh/g) | 360 | 365 | 355 | 357 | 358 | 365 | 360 | 345 | 355 |
| charge C-rate(%) | 45 | 40 | 50 | 47 | 48 | 32 | 30 | 40 | 40 |
| DCIR(Ω) | 6.3 | 7.1 | 5.8 | 6.3 | 6.0 | 7.5 | 8.0 | 7.5 | 7.5 |
| Rion(Ω) | 21 | 25 | 20 | 22 | 22 | 30 | 33 | 25 | 27 |

As shown in Table 1, each of the negative electrode active materials for a rechargeable lithium battery of Examples provided high energy density and boost charging performance. The negative electrode active material of each example has a low DCIR, which helps prevent lithium plating during high-rate charging. In addition, the negative electrode active material of each example has a low Rion representing ionic resistance, which facilitates the movement of lithium ions in the electrode plate, and therefore it can be expected to be advantageous for fast charging. In addition, compared to the negative electrode active material of each comparative example, the negative electrode active material of each example has a small size, and thus can be used in the manufacture of a thin film electrode plate, which is beneficial for producing a battery suitable for fast charging. Therefore, the negative electrode active materials of the Examples can provide boost charging performance and a long cycle life.

However, as shown in Table 1, the negative electrode active materials of Comparative Examples not only have lower rate capability but also have a higher DCIR and lower Rion, compared to the negative electrode active materials of Examples, confirming that the boost charging performance and long cycle life are significantly reduced compared to those of the negative electrode active materials of Examples.

Although one or more embodiments of the present disclosure have been described above, the present disclosure is not limited thereto, and it is possible to implement various modifications within the scope of the claims and equivalents thereof, the detailed description of the present disclosure, and the accompanying drawings. It is obvious that these modifications also fall within the scope of the present disclosure.

**Claims**

1. A negative electrode active material comprising:

   natural graphite comprising secondary particles in which primary particles are assembled; and a coating layer that surrounds the secondary particle and comprises amorphous carbon,
   wherein the negative electrode active material has a d002 value of 3.356 angstrom (Å) to 3.360 Å and an orientation degree of 90 or less, and
   wherein the negative electrode active material is for a rechargeable lithium battery.

2. The negative electrode active material of claim 1, wherein the negative electrode active material has an Hg cumulative pore volume of 0.01 mL/g to 0.06 mL/g.

3. The negative electrode active material of claim 1 or 2, wherein the negative electrode active material has a pellet density of 1.60 g/cc to 1.80 g/cc.

4. The negative electrode active material of any of claims 1 to 3, wherein the negative electrode active material has a sphericity of 0.85 or greater.

5. The negative electrode active material of any of claims 1 to 4, wherein the ratio of the major axis length of the primary particle to the average particle diameter (D50) of the secondary particles is greater than 2 and 10 or less.

6. The negative electrode active material of any of claims 1 to 5, wherein the primary particle is flaky, and the secondary particle is spherical.

7. The negative electrode active material of any of claims 1 to 6, wherein the major axis length of the primary particle ranges from 10 $\mu$m to 200 $\mu$m.

8. The negative electrode active material of any of claims 1 to 7, wherein the average particle diameter (D50) of the secondary particles is 30 $\mu$m or less.

9. The negative electrode active material of any of claims 1 to 8, wherein the natural graphite is flaky natural graphite.

10. The negative electrode active material of any of claims 1 to 9, wherein the amorphous carbon is a mixture of at least one selected from among soft carbon, hard carbon, mesophase pitch carbide, and calcined coke.

11. The negative electrode active material of any of claims 1 to 10, wherein the thickness of the coating layer containing the amorphous carbon is 5 nm to 50 nm.

12. The negative electrode active material of any of claims 1 to 11, wherein amorphous carbon is present on the surface of the primary particle.

13. The negative electrode active material of any of claims 1 to 12, wherein a weight ratio of the natural graphite and the amorphous carbon is 90:10 to 75:25 with respect to 100 parts by weight of the total of the natural graphite and the amorphous carbon of the negative electrode active material.

**14.** A negative electrode plate comprising the negative electrode active material of any of claims 1 to 13.

**15.** A rechargeable lithium battery, comprising:

a negative electrode comprising the negative electrode active material of any of claims 1 to 13; and
a positive electrode.

**FIG. 1.**

**FIG. 2.**

**FIG. 3.**

**FIG. 4.**

100

50

72

40

71

10

30

20

**FIG. 5.**

Europäisches
Patentamt
European
Patent Office
Office européen
des brevets

# EUROPEAN SEARCH REPORT

**Application Number**

EP 25 21 9302

## DOCUMENTS CONSIDERED TO BE RELEVANT

| Category | Citation of document with indication, where appropriate, of relevant passages | Relevant to claim |
|---|---|---|
| X | US 2024/250243 A1 (KIM NARAE [KR] ET AL) 25 July 2024 (2024-07-25)<br>* examples 1-6 *<br>* Comparative Example 1 *<br>* tables 1, 3 *<br>* paragraphs [0008] - [0011], [0043], [0053], [0112] *<br>* figures 5-6 *<br>* claims 1,11 *<br>----- | 1-15 |
| X | EP 4 465 381 A1 (SAMSUNG SDI CO LTD [KR]) 20 November 2024 (2024-11-20)<br>* example 1 *<br>* table 1 *<br>* paragraphs [0030], [0050] - [0054] *<br>* figure 5 *<br>----- | 1,4-15 |

**CLASSIFICATION OF THE APPLICATION (IPC)**

INV.
H01M4/133
H01M4/1393
H01M4/36

**TECHNICAL FIELDS SEARCHED (IPC)**

H01M

The present search report has been drawn up for all claims

| Place of search | Date of completion of the search | Examiner |
|---|---|---|
| Munich | 24 March 2026 | Galbiati, Ivano |

EPO FORM 1503 03.82 (P04C01)

## ANNEX TO THE EUROPEAN SEARCH REPORT
## ON EUROPEAN PATENT APPLICATION NO.

EP 25 21 9302

This annex lists the patent family members relating to the patent documents cited in the above-mentioned European search report.
The members are as contained in the European Patent Office EDP file on
The European Patent Office is in no way liable for these particulars which are merely given for the purpose of information.

24-03-2026

| Patent document cited in search report | Publication date | Patent family member(s) | Publication date |
|---|---|---|---|
| US 2024250243 A1 | 25-07-2024 | EP 4478454 A1<br>US 2024250243 A1 | 18-12-2024<br>25-07-2024 |
| EP 4465381 A1 | 20-11-2024 | CN 118943315 A<br>EP 4465381 A1<br>KR 20240163415 A<br>US 2024379959 A1 | 12-11-2024<br>20-11-2024<br>19-11-2024<br>14-11-2024 |

EPO FORM P0459

For more details about this annex : see Official Journal of the European Patent Office, No. 12/82

**EP 4 752 957 A1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- KR 1020240175698